Europäisches Patentamt

European Patent Office

Office européen des brevets

(11) Publication number: **0 160 718**
**B1**

(12) **EUROPEAN PATENT SPECIFICATION**

(45) Date of publication of patent specification: **06.02.91**

(21) Application number: **84105063.6**

(22) Date of filing: **04.05.84**

(51) Int. Cl.⁵: **B 64 C 25/14, B 64 C 25/58**

(54) Short takeoff jump mode for aircraft landing gear struts.

(43) Date of publication of application:
**13.11.85 Bulletin 85/46**

(45) Publication of the grant of the patent:
**06.02.91 Bulletin 91/06**

(84) Designated Contracting States:
**DE FR GB IT**

(56) References cited:
**FR-A-2 270 469**
**GB-A- 793 447**
**US-A-1 767 120**
**US-A-4 273 303**
**US-A-4 300 664**

(73) Proprietor: **GRUMMAN AEROSPACE**
**CORPORATION**
**South Oyster Bay Road**
**Bethpage, NY 11714 (US)**

(72) Inventor: **Gebhard, David F.**
**96 Markan Drive**
**Northport New York (US)**

(74) Representative: **Diehl, Hermann O. Th., Dr. et al**
**Diehl & Partner Flüggenstrasse 17**
**D-8000 München 19 (DE)**

Courier Press, Leamington Spa, England.

## Description

The present invention relates to a short takeoff jump mode for aircraft telescoping landing gear struts. More particularly, the invention relates to a method and a jump strut device resulting in early takeoff of an aircraft, or, alternatively, more aircraft payload without ground roll increase.

In years past, various devices relating to vertically accelerating an airplane during its takeoff roll have been patented. Examples of these are shown by United States patents Nos. 1,254,898; 1,317,414 and 1,702,682 which suggest projecting struts downwardly to impact the ground and by extension raise the airplane into the air with rotation or extension of the struts, United States patents Nos. 1,068,165 and 1,767,120 which show the extension of the landing gear wheels. United States patent No. 1,745,081 which pivots an undercarriage through an arc in order to raise the height of the airplane from the ground. These prior art teachings do not suggest very practical integration of the concept of jumping an airplane with the use of a telescopic shock absorber.

In fact, efforts to provide short takeoff capability on recent airplane designs have focused on more thrust and/or tilted thrust from the propulsion system, and wings that lift more at low speeds, rather than improved landing gears. An exception to this is the use by the British Royal Navy of an inclined ramp on an aircraft carrier forward deck to launch the airplane in a trajectory which is initially upward.

An obvious problem with this ramp technique for aircraft operating on land is that the ramp must always be at the upwind end of the runway, and the downwind end of the runway must be unobstructed. Since shifting wind direction is a nearly omnipresent condition, the ramp must frequently be relocated.

Another obvious problem with this ramp concept is the loadimg of the airplane undercarriage mounting in an unfamiliar pattern, which can result in a requirement for extensive structural modifications with consequent performance penalties.

A frequent problem during the takeoff of nose wheel aircraft with a high ratio of engine thrust to aircraft weight is that the sum of the nose down thrust moment and aircraft weight moment about the main wheel axis exceeds the available nose up aerodynamic control moment until a high speed is reached. Thus, the aircraft cannot lift off the ground, even though it may have enough speed to generate adequate lift if the proper high angle of attack could be achieved.

In US—A—1,745,081 which corresponds to the features of the precharacterizing part of claims 1 and 2 respectively, an extendible landing gear affixed to a front part of the airplane is disclosed which, when energized, tilts the nose of the airplane upwards by means of a pneumatic cylinder and piston. This action is going on relatively slowly and does not contribute much to the lifting of the airplane's gravity centre. Further, since no means are provided for retracting the landing gear from their fully extended position while the plane is airborne, ihs shock absorbing capability during landing is relatively poor.

Likewise, in a plane in accordance with US—A—1,068,165 which corresponds to the precharacterizing part of claim 5 the remaining spring force after extension of the struts which are extendible by mechanical spring forces from a latched position to a fully extended position is not sufficient for the purposes of a shock absorber to be used in a modern aircraft. In addition, part of said struts is affixed to the plane behind its gravity center, so that the lifting action of said struts will be accompanied by a diminution of the planes angle of attack.

The principal object of the present invention is to provide a short ground run or overload jump takeoff method and device for telescopic airplane landing gear shock struts neither of which method nor device requires significant change in the airplane configuration, structure, aerodynamics, or propulsion design, which does not involve departures from the standard stability and control flight envelope of the plane, and which requires no elaborate ground-based equipment.

An object of the invention is to provide a method and device for increasing the angle of attack of the airplane at an early point in its takeoff roll to increase the lift and permit a shorter takeoff ground run, which method requires no significant change in the airplane configuration, structure, aerodynamics, or propulsion design, and which requires no elaborate ground-based equipment.

Another object of the invention is to couple to a state-of-the-art airplane shock absorber a system for varying its air pressure loading, to effect initial latching thereof, and thereafter to pressurize same to force rapid extension thereof upon release of the latch with quick reversion to the shock absorption mode, thereby to provide early takeoff or payload increase of the airplane.

Still another object of the invention is to provide a jump strut device of simple structure which reverts quickly to the shock absorption mode and which provides a short takeoff or payload increase for an airplane via the telescopic shock struts of the aircraft.

Yet another object of the invention is to provide a jump strut device which is inexpensive in manufacture and maintained with facility and convenience, providing early takeoff or increased payload of an airplane.

Another object of the invention is to provide a jump strut device for short takeoff or increased payload of an airplane with efficiency, effectiveness, reliability and safety.

More specifically, the invention aims at providing a shortened takeoff ground run, or, alternatively, a payload increase without an increase in takeoff ground run, the airplane having telescopic shock struts affixed to and extendible from the airplane, typically at both the forward portion and near the centre of gravity, comprises the steps of bleeding the fluid from the shock struts to collapse them, restraining the shock struts in an unenergized compressed condition, energising the struts with compressed fluid, releasing the struts during the takeoff ground run whereby first the energy of the forward strut extends the telescoping portion of the strut from the airplane thereby jumping the nose of the airplane upward and increasing the angle of attack of the airplane to cause an increase in lift to aid in counteracting gravity effect. Subsequent to the nose-up rotation, the same jump action of the struts near the center of gravity pushes the entire airplane upward, resulting in an initially upward but downwardly curved, trajectory, which produces a generally upward centrifugal force. This trajectory is defined by continuously diminishing gravity effect due to increasing wing lift, and the substantial horizontal acceleration provided by the propulsion system. The aircraft does not return to earth and there is a substantial reduction in the takeoff ground run.

After the jump operation, residual pressurizing gas is vented off as necessary to provide the proper gas charge for the landing shock absorption function. Rolling shock attenuation during the takeoff ground run is provided by the landing gear tires.

Therefore, in accordance with the invention, a method of facilitating early takeoff of an aircraft having a landing gear being affixed to and extendible from the aircraft, wherein fluid pressure is applied to said landing gear during takeoff to extend it from an unenergized collapsed condition to a fully extended position in order to lift at least a forward part of the aircraft upwards, thereby increasing its angle of attack, comprises the steps of

(a) collapsing telescopic shock struts (3 to 5, 11, 12) affixed to and extendible from the aircraft (1) from an intermediate position corresponding to the aircraft landing operation mode by venting pressure from cavities (18) within said struts, latching said telescopic shock struts (3 to 5, 11, 12) in said collapsed position and applying pressure to said cavities (18) while the struts are latched in said collapsed position,

(b) releasing said telescopic shock struts (3 to 5, 11, 12) during takeoff for pushing the aircraft (1) and/or a forward part of it upwards, and

(c) venting the pressurized energy from said cavities (18) of said telescopic shock struts (3 to 5, 11, 12) to return said struts from their fully extended position to said intermediate position after takeoff.

A jump strut device for implementing said method comprises

(a) at least one telescopic shock strut comprising an upper cylinder (11) and a telescopic cylinder (12), the strut (11, 12) being affixed to and extendible from said aircraft (1);

(b) venting means (47 to 49) for controlling the release of pressure from a cavity (18) within said strut to collapse said strut (11, 12) from an intermediate position;

(c) latching means (26, to 29, 31, to 33) for latching the shock strut (11, 12) in a collapsed condition;

(d) pressure means (24, 25) for pressurizing said interior cavity (18) of said shock strut (11, 12) while it is latched in said collapsed condition; and is characterized by

(e) release means (31) for unlatching said latching means during takeoff run acceleration of said aircraft, whereby the internal pressure of said strut (11, 12) extends said strut from said aircraft (1) to an extended position beyond said intermediate position, thereby pushing said aircraft upward and/or increasing its angle of attack, said strut (11, 12) remaining extended until said pressure is vented to return said strut to said intermediate position after takeoff.

Preferably, said pressure means comprises a source of compressed gas (24) and valve means (25) for selectively controlling the flow and pressure of said gas to said cavity (18), thereby controlling the axial position of said telescopic cylinder (12), and accordingly, the distance between said landing wheel and said aircraft (1) and it further includes an orifice support tube (34) coaxially positioned in said telescopic cylinder (12), and a metering pin (33) coaxially slidably mounted in said orifice support tube (34) and said release means comprises a load release sleeve (31) coaxially positioned with and abutting part of said latching means when said latching means is locked, said load release sleeve (31) maintaining said metering pin (33) in locked position in said orifice support tube (34) and, when moved, permitting said part of said latching means to expand, thereby permitting another part of said latching means to collapse and releasing said metering pin to release said latching means from its locked position.

Another method of facilitating early takeoff of an aircraft having extendible struts affixed to and extendible from parts of the aircraft having different longitudinal positions with respect to the gravity center of the aircraft, wherein the struts are energized and latched in a collapsed position, and wherein forward and rearward struts are subsequently released in that order during takeoff for giving respective parts of the aircraft an initial impetus in leaving the ground, is characterized by

(a) applying fluid energy to cavities (18) of first telescopic shock struts (3, 11, 12) affixed to a forward part of the aircraft (1) and of second telescopic shock struts (4, 5, 11, 12) affixed to the aircraft near its center of gravity while said struts (3 to 5, 11, 12) are latched in a collapsed position,

(b) accelerating said aircraft (1) from standstill to a predetermined velocity and releasing said first struts (3, 11, 12), thereby tilting the aircraft upwards and increasing its angle of attack, and

(c) subsequently releasing said second telescopic shock struts (4, 5, 11, 12), thereby pushing the entire aircraft (1) upwards while substantially retaining said increased angle of attack, and

(d) venting the fluid energy from said cavities (18) of said first and second telescopic shock struts (3, 4, 5, 11, 12) to return said struts to an intermediate position corresponding to the aircraft landing operation mode after takeoff.

Preferably, the sequence for energizing said shock struts (3 to 5, 11, 12) is initiated by a probe at the airplane tail, located so that the tail does not strike the ground.

In order that the invention may be readily carried into effect, it will now be described with reference to the accompanying drawings, wherein:

Fig. 1 is a perspective view of an airplane that has been jumped into the air during a takeoff roll in accordance with the invention.

Fig. 2A is a schematic view of an embodiment of the jump strut device of the invention for effecting the jump shown in Fig. 1.

Fig. 2B is partly in section view, of part of the embodiment of Fig. 2A, showing the metering pin of the telescopic shock strut of Fig. 2A.

Fig. 3 is a schematic block diagram of an embodiment of the pressurization system of the shock absorber of Fig. 2A.

Fig. 4 is a cross-sectional view, on an enlarged scale, of the latching device in locked and unlocked positions.

Fig. 5 is a graphical presentation of the airplane loading due to the pressurization of the telescopic shock absorber with the jump strut of the invention and without;

Fig. 6 is a graphical presentation of the ground roll at various wind speeds for takeoff of an aircraft with the jump strut of the invention and without;

Fig. 7 is a graphical presentation of an airspeed time history of a jump takeoff; and

Fig. 8 is a graphical presentation of an attitude time history of a jump takeoff.

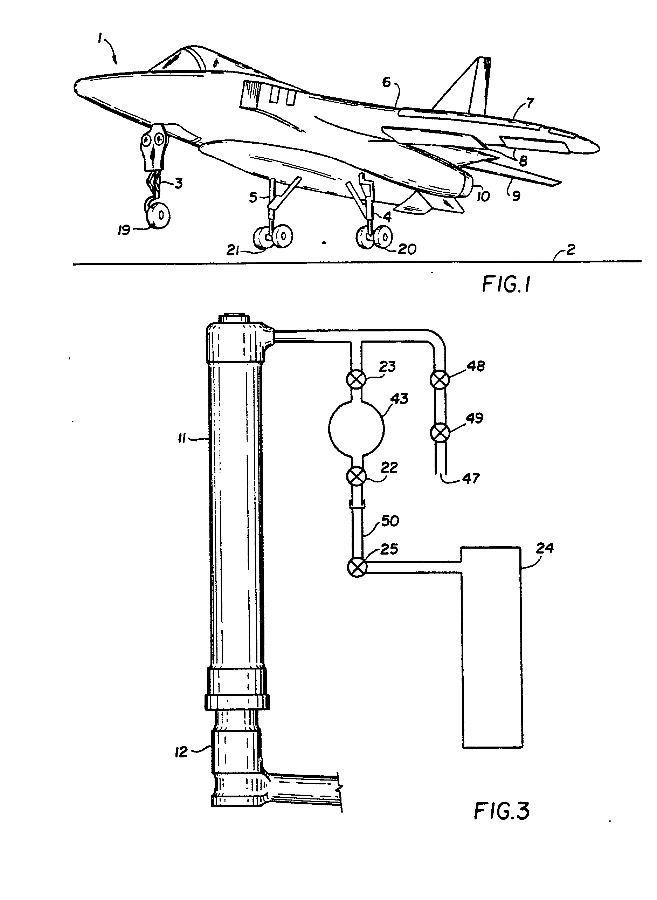

A jet airplane 1 which has been jumped from a runway 2 during its takeoff roll by pressure within telescopic shock struts 3, 4 and 5 of the landing gear is shown in Fig. 1. As shown in Fig. 1, the airplane 1 during the jump sequence is pitched nose up to increase the angle of attack of the wings. The port wing 6 is shown with leading edge and trailing edge lift improvement means 7 and 8 being in the takeoff position. In order to assist this pitching, the airplane's movable elevator 9 is in a leading edge down attitude. Lift generation at low speeds may be further assisted by use of fixed tilt or variable tilt engine thrust nozzles, one of which 10 is shown on the airplane's port side. It is intended to seek, by cooperation of all aerodynamic devices and propulsion means, as well as by the curved jump trajectory, to amplify the lift generation and airplane takeoff velocity within the jump cycle.

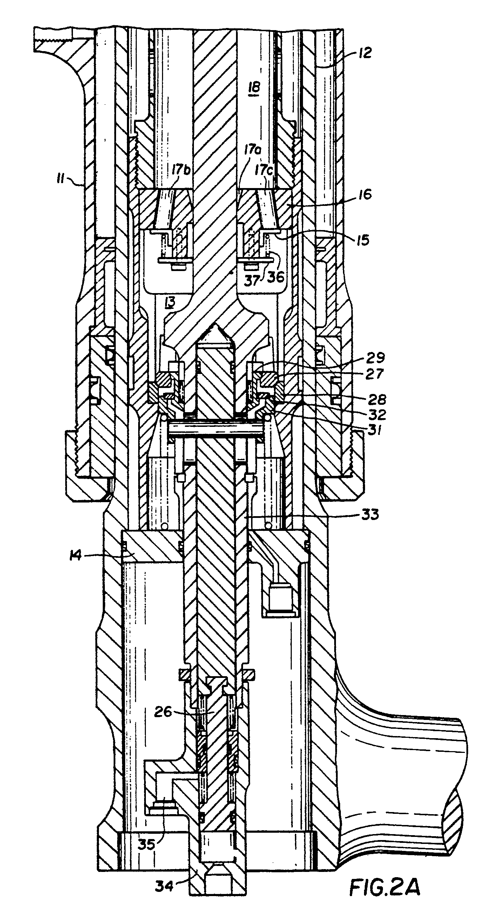

In the dual mode strut of the invention, shown in Fig. 2A, the aforedescribed jump technique is effected while retaining landing shock absorption capability. Each of the struts 3, 4 and 5 is designed to have a fixed cylinder 11 and a telescoping cylinder 12 with a cylindrical metering chamber 13 closed at its lower end by a cylinder end wall 14 and at its upper end by a check valve 15. The metering chamber 13 is provided with an orifice ring 16 which limits the fluid passage from one side of the device to the other as the lower or telescoping cylinder 12 telescopes into the upper cylinder 11. The check valve 15 precludes this fluid flow limiting by the orifice when the lower cylinder 12 extends from the upper cylinder 11. The orifice ring 16 of the metering device is provided with a plurality of holes 17a, 17b, 17c, etc. for communication of its metering or inner chamber 13 with an upper chamber 18 of the shock strut (Fig. 2A).

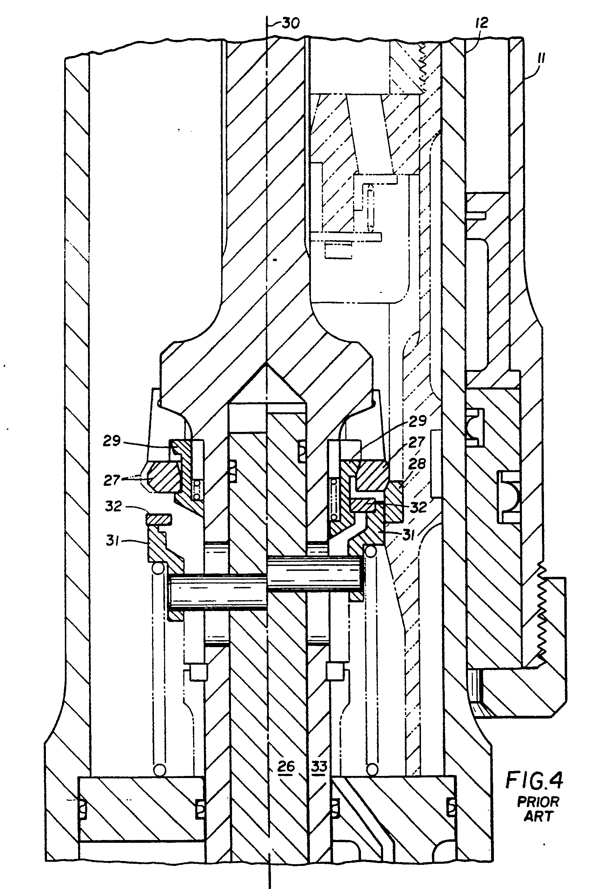

As with any shock absorber, it is filled with a liquid to a predetermined level and pressurized gas is introduced into the upper chamber 18 to normally maintain a non-loaded extension of the strut that will permit relative movement of the airplane wheels 19, 20 and 21 (Fig. 1). The only variation to this normal shock absorber concept in this invention is that, for the jump takeoff mode, the telescoping cylinder 12 may be latched with respect to the fixed cylinder 11 the gas pressure and volume may be increased by charging a valve 22 and a shut-off valve 23 (Fig. 3) to contain enough energy so that upon release of the latch a suitable jump energy is imparted to the airplane. This is accomplished by the apparatus shown in Fig. 3, which apparatus includes a portable high pressure gas tank 24 of a volume much greater than the charge volume required by a jump strut. A valve 25 controls the delivery of pressurized fluid from the tank 24 to the interior of the upper cylinder 11 and the bleeding of fluid pressure therefrom.

The lower cylinder 12 and the upper cylinder 11 are provided with a latching device controlled by an actuator 26 to hold said lower cylinder in its maximum compressed attitude in accordance with the invention.

Any suitable latching device may be utilized such as, for example, that disclosed in United States patent No. 4,300,664, issued November 17, 1981 to Helm et al. The latching device of this patent has multiple components which must move before axial travel of a load exerting component becomes unblocked. These components include a main lock part which is radially movable to unblock the axial travel and an axially movable holder which blocks radial movement of the main lock part. A radially movable trigger part blocks axial movement of the holder and a release structure blocks radial movement of the trigger. Two main lock parts and the trigger part comprise multiple elements spaced apart about the axis of the latching device for independent radial movement.

The latching device comprises a lock ring 27 (Figs 2A and 4) which is loaded against a seat 28 by the strut axial load, as shown in Figs. 2A and 4, when the latching device is locked. A load transfer sleeve 29 prevents the collapse of the lock ring 27 (Figs. 2A and 4). The locked position of the latching device is shown to the right of line 30 in Fig. 4 and the released or unlocked position of said latching device is shown to the left of said line.

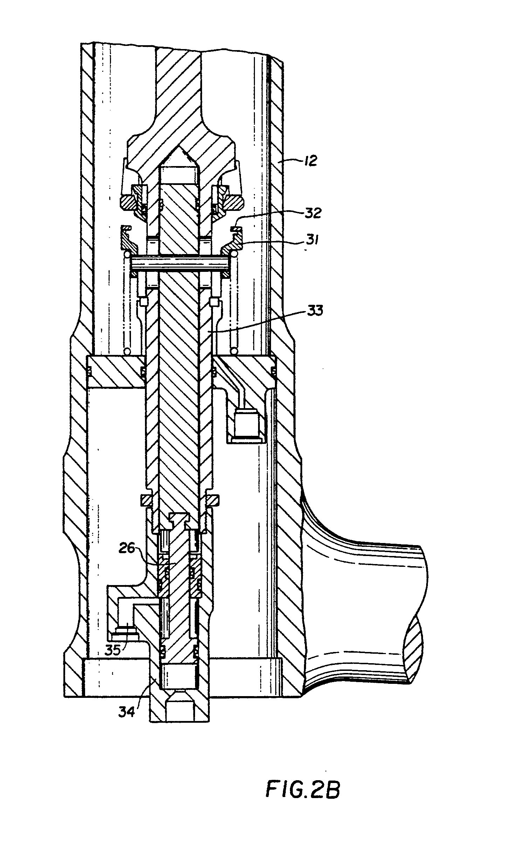

The motion of a load release sleeve 31 (Figs. 2A, 2B and 4) permits a lock ring 32 to expand, permitting the collapse of the lock ring 27 and releasing a locked metering pin 33 from an orifice support tube 34, thereby releasing the latching device from its locked position, as shown in Figs. 2A, 2B and 4. The lock rings 27 and 32 are split rings. The load release sleeve 31 is released by hydraulic pressure via a valve 35 (Figs. 2A and 2B). When the hydraulic pressure reaches a predetermined level, it triggers the actuator 26 (Figs. 2A, 2B and 4) thereby releasing the metering pin 33 (Figs. 2A, 2B and 4).

As shown in Fig. 2A, the check valve 15 of the metering chamber comprises a check or flapper valve biased by a spring 36 compressed between said valve and a port plate 37. As seen, the port plate 37 is removable to service the valve 15.

Fig. 5 is a graphical presentation including an analytical evaluation 40 for a main gear shock strut of the effect of the jump strut charge gas loading on the airplane 1 due to the strut extension for jumping of the airplane from the runway 2 during a takeoff, and a comparison of airplane charge gas loading for stroking of the telescopic shock strut of this invention, shown by curve 41, after the jump stroke has been completed and the residual charge pressure bleed off to the landing shock absorption level. This is compared with the charge gas loading of an original non-jumping strut in curve 42. A comparison of curves 41 and 42 shows that the gas charge at the end of the jump operation is suitable for the landing shock absorption mode. In arriving at these results the following facts were known:

Airplane Gross Weight=6.804 kg (15,000 lbs)
Main Gear Shock Strut,
    (a) Cylinder Area=113.36 cm$^2$ (17.57 in.$^2$)
    (b) Fully compressed Air Volume=1,452.40 cm$^3$ (88.62 in.$^3$)
    (c) Full Stroke=50.8 cm (20 in.)
    (d) Stroke to Static Position=40.6 cm (16 in.)
    (e) Desired Jump Vertical Velocity=3.32 m/s (10.9 ft./s)
Initial Load Limit to Airplane on Jumping=5 g.

The selected air charge pressure was 150 kg/cm$^2$ (2134 lbs./in.$^2$), which is a value well within standard pneumatic charging equipment capacity for servicing an airplane. This pressurization, assuming that, at the main gear jump point, the wing and propulsion lift is 15% less than the airplane weight, and a normal adiabatic expansion providing 80% useful fluid energy, will provide the 3.32 m/s (10.9 ft./s) jump if the original strut volume is increased slightly to add 2,057.74 cm$^3$ (125.27 in.$^3$) of volume. This volume can be provided by a 18.16 cm (7.15 inch) strut length increase or an air bottle 43 volume of such shape and location as further facilitates the landing gear system design (Fig. 3).

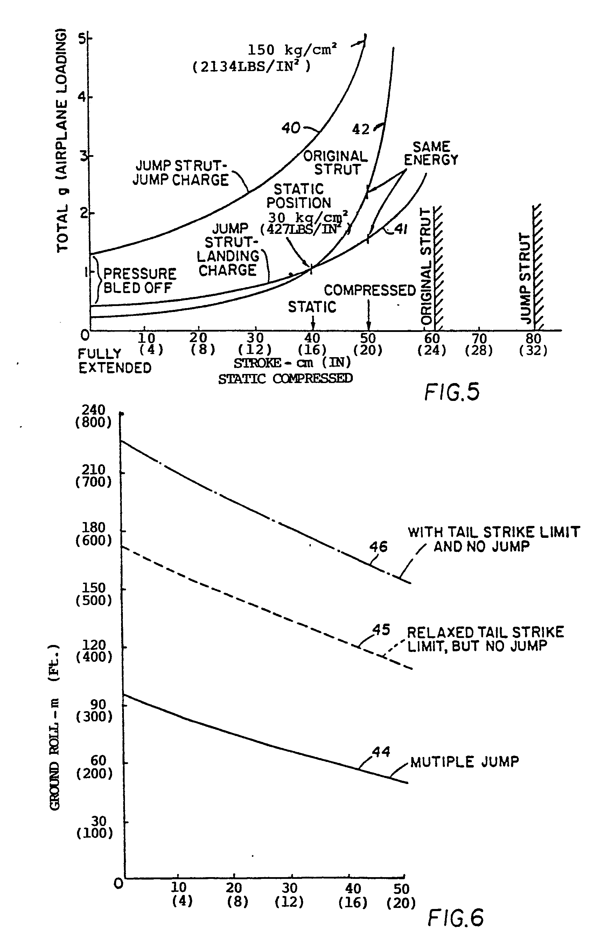

Fig. 6 graphically presents a comparison of the performance of an airplane with the present invention and the performance of the same airplane without the benefit of the present invention in curves 44 and 45, respectively. Curve 44 represents the required takeoff ground roll for various wind conditions for an airplane having a main gear jump takeoff airspeed of 142.7 km/h (77 kts). The nose gear is jumped first and, as the tail approaches the ground, the main gear is jumped, producing 3.32 m/s (10.9 ft./s) vertical velocity and providing clearance for the tail at the desired 16° angle of attack. Curve 46 represents the same airplane without the jump strut feature. It would take off at 190.9 km/h (103 kts) if it could pitch up to 16° with conventional aerodynamic pitch control and if the landing gear and tail configuration would permit achieving this high angle before reaching 190.9 km/h (103 kts) with the main wheels still on the ground. The airplane of the example, which typifies modern design practice, cannot meet either of these requirements, but must accelerate to 220.5 km/h (119 kts) airspeed where it can lift off at 10° angle of attack. Thus the present invention provides for those skilled in the art a significant takeoff performance benefit which, as shown in Fig. 6 can comprise a significant takeoff ground run reduction of approximately 60%.

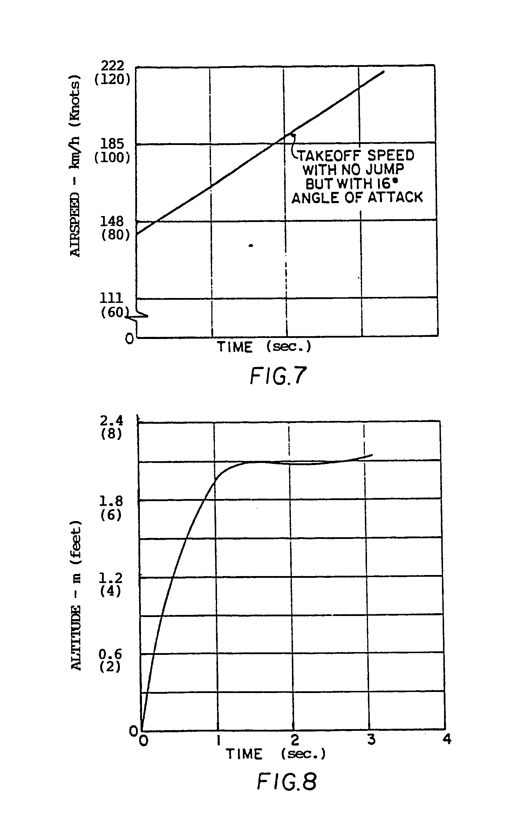

Figs. 7 and 8 are graphical presentations of a time history airspeed and altitude of the jump starting with the point at which the main wheels leave the ground. These Figs. clearly show that the climb rate starts to diminish rapidly and actually becomes a slightly negative value after the altitude of seven feet is first reached at 1.5 seconds. During this interval the airplane has gained an additional 35.2 km/h (19 kts) of airspeed and is only 13.0 km/h (7 kts) and 0.6 seconds short of the 190.9 km/h (103 kts) needed for steady flight. This brief shortage is the explanation for the mild reduction in altitude between 1.5 and 3.0 seconds.

The foregoing description indicates that the jump strut of the invention benefits the airplane takeoff by providing a high angle of attack capability at a low speed and which is beyond the angle limited by the tail striking the ground, and by launching the airplane in an initially upward trajectory which, as it curves downward toward level flight, generates a generally upward centrifugal force to help sustain the airplane while it is gaining enough airspeed for steady level flight.

In operation, it is necessary to sequence the jumping of the nose gear telescopic strut 3 and then the main landing gear telescopic struts 4 and 5 in a sequence which provides the desired high angle of attack with a low pitch rate. To prepare for the jump, however, the struts are first bled to compress them by opening their fluid pressure chambers to a bleed port 47 via a reversion valve 48 and a relief valve 49 (Fig. 3). The strut collapses sufficiently to lock the telescoping cylinder 12 at its first predetermined locked position (Figs. 2A, 2B and 4), so that the wheels 19, 20 and 21 are at the first predetermined distance from the aircraft 1 for normal takeoff.

The charging valve 22, the shut-off valve 23 and the valve 25 are activated at the desired ground speed, the nose strut latch is first released by its load release sleeve 31 and then the main landing gear system is unlatched by its load release sleeve 31. The main landing gear unlatch sequence is initiated by a probe at the airplane tail, located so that it insures that the tail does not strike the ground. As the strut moves downward, the pressure and spring bias on the valve 15 lessens to open a passage through the metering device to nullify orificing of oil, thus enhancing rapid extension of the strut during its jump stroke.

After becoming airborne, the reversion pressure within the struts is returned to the normal shock absorber pressure, that is, reduced from 39 kg/cm² (555 lbs/in.²) to 11.4 kg/cm² (162 lbs/in.²) by the reversion valve 48 with appropriate pressure limits via the pressure relief valve 49, porting to the bleed port 47.

Although shown and described in what are believed to be the most practical and preferred embodiments, it is apparent that departures from the specific methods and designs described and shown will suggest themselves to those skilled in the art and may be made without departing from the invention as claimed. I, therefore, do not wish to restrict myself to the particular constructions described and illustrated, but desire to avail myself of all modifications that may fall within the scope of the appended claims.

## Claims

1. A method of facilitating early takeoff of an aircraft having a landing gear being affixed to and extendible from the aircraft, wherein fluid pressure is applied to said landing gear during takeoff to extend it from an unenergized collapsed condition to a fully extended position in order to lift at least a forward part of the aircraft upwards, thereby increasing its angle of attack, characterized by the steps of

(a) collapsing telescopic shock struts (3 to 5, 11, 12) affixed to and extendible from the aircraft (1) from an intermediate position corresponding to the aircraft landing operation mode by venting pressure from cavities (18) within said struts, latching said telescopic shock struts (3 to 5, 11, 12) in said collapsed position and applying pressure to said cavities (18) while the struts are latched in said collapsed position,

(b) releasing said telescopic shock struts (3 to 5, 11, 12) during takeoff for pushing the aircraft (1) and/or a forward part of it upwards, and

(c) venting the pressurized energy from said cavities (18) of said telescopic shock struts (3 to 5, 11, 12) to return said struts from their fully extended position to said intermediate position after takeoff.

2. A jump strut device for implementing the method of claim 1, comprising

(a) at least one telescopic shock strut comprising an upper cylinder (11) and a telescopic cylinder (12), the strut (11, 12), being affixed to and extendible from said aircraft (1);

(b) venting means (47 to 49) for controlling the release of pressure from a cavity (18) within said strut to collapse said strut (11, 12) from an intermediate position;

(c) latching means (26 to 29, 31 to 33) for latching the shock strut (11, 12) in a collapsed condition;

(d) pressure means (24, 25) for pressurizing said interior cavity (18) of said shock strut (11, 12) while it is latched in said collapsed condition; and characterized by

(e) release means (31) for unlatching said latching means during takeoff run acceleration of said aircraft, whereby the internal pressure of said strut (11, 12) extends said strut from said aircraft (1) to an extended position beyond said intermediate position, thereby pushing said aircraft upward and/or increasing its angle of attack, said strut (11, 12) remaining extended until said pressure is vented to return said strut to said intermediate position after takeoff.

3. A jump strut device as claimed in Claim 2, wherein said pressure means comprises a source of compressed gas (24) and valve means (25) for selectively controlling the flow and pressure of said gas to said cavity (18), thereby controlling the axial position of said telescopic cylinder (12), and accordingly, the distance between said landing wheel and said aircraft (1).

4. A jump strut device as claimed in Claim 2, wherein said shock strut (11, 12) further includes an orifice support tube (34) coaxially positioned in said telescopic cylinder 12, and a metering pin (33) coaxially slidably mounted in said orifice support tube (34) and said release means comprises a load release sleeve (31) coaxially positioned with and abutting part of said latching means when said latching means is locked, said load release sleeve (31) maintaining said metering pin (33) is locked position in said orifice support tube (34) and, when moved, permitting said part of said latching means to expand, thereby permitting another part of said latching means to collapse and releasing said metering pin to release said latching means from its locked position.

5. A method of facilitating early takeoff of an aircraft having extendible struts affixed to and extendible from parts of the aircraft having different longitudinal positions with respect to the gravity center of the aircraft, wherein the struts are energized and latched in a collapsed position, and wherein forward and rearward struts are subsequently released in that order during takeoff for giving respective parts of the aircraft an initial impetus in leaving the ground, characterized by

(a) applying fluid energy to cavities (18) of first telescopic shock struts (3, 11, 12) affixed to a forward part of the aircraft (1) and of second telescopic shock struts (4, 5, 11, 12) affixed to the aircraft near its center of gravity while said struts (3 to 5, 11, 12) are latched in a collapsed position,

(b) accelerating said aircraft (1) from standstill to a predetermined velocity and releasing said first struts (3, 11, 12), thereby tilting the aircraft upwards and increasing its angle of attack, and

(c) subsequently releasing said second telescopic shock struts (4, 5, 11, 12), thereby pushing the entire aircraft (1) upwards while substantially retaining said increased angle of attack, and

(d) venting the fluid energy from said cavities (18) of said first and second telescopic shock struts (3, 4, 5, 11, 12) to return said struts to an intermediate position corresponding to the aircraft landing operation mode after takeoff.

6. A method as described in claim 5, further characterized in that the sequence for energizing said shock struts (3 to 5, 11, 12) is initiated by a probe at the airplane tail, located so that the tail does not strike the ground.

**Patentansprüche**

1. Verfahren zur Erleichterung des frühzeitigen Abhebens eines Flugzeuges, das ein an dem Flugzeug befestigtes, aus dem Flugzeug ausfahrbares Fahrwerk aufweist, wobei während des Startes Flüßigkeitsdruck an das Fahrwerk angelegt wird, um es von einer in energielosem Zustand zusammengeklappten Stellung in eine voll ausgeklappte Stellung auszufahren und dadurch zumindest einen vorderen Teil des Flugzeuges anzuheben und auf diese Weise seinen Anstellwinkel zu vergrößern, gekennzeichnet durch die Verfahrensschritte

(a) Einfahren von teleskopischen, stoßdämpfenden Fahrwerksbeinen (3 bis 5, 11, 12), die am Flugzeug (1) befestigt und vom Flugzeug ausfahrbar sind, aus einer mittleren Position, die der Landekonfiguration des Flugzeuges entspricht, in die besagte zusammengeklappte Stellung durch Ablassen von Druck aus Hohlräumen (18) innerhalb der besagten Fahrwerksbeine (3 bis 5, 11, 12), Verriegeln der teleskopischen, stoßdämpfenden Fahrwerkzbeine (3 bis 5, 11, 12) in der zusammengeklappten Stellung und Einbringen von Druck in die besagten Hohlräume (18) während die Fahrwerksbeine in der zusammengeklappten Stellung verriegelt sind,

(b) Entriegeln der besagten teleskopischen, stoßdämpfenden Fahrwerksbeine (3 bis 5, 11, 12) während des Startes, um das Flugzeug (1) und/ oder einen vorderen Teil davon nach oben zu drücken, und

(c) Ablassen der Druckenergie aus den besagten Hohlräumen (18) der teleskopischen, stoßdämpfenden Fahrwerksbeine (3 bis 5, 11, 12), um diese Fahrwerksbeine nach dem Abheben aus ihrer voll ausgefahrenen Stellung in die besagte mittlere Stellung zurückzubringen.

2. Luftfederbein zur Durchführung des Verfahrens nach Anspruch 1, mit

(a) mindestens einem teleskopischen, stoßdämpfenden Fahrwerksbein, das einen oberen Zylinder (11) und einen teleskopischen Zylinder (12) aufwest, wobei das Fahrwerksbein (11, 12) am Flugzeug (1) befestigt und davon ausfahrbar ist;

(b) Druckablaßmittel (47 bis 49), um das Absenken des Druckes in einer der Hohlräume (18) in dem besagten Fahrwerksbein zu steuern und dieses Bein (11, 12) aus einer mittleren Position zusammen zu klappen;

(c) Verriegelungsmittel (26 bis 29, 31 bis 33) um das Fahrwerksbein (11, 12) in einer zusammengeklappten Stellung zu verriegeln; und

(d) Druckmittel (24, 25), um den besagten inneren Hohlraum (18) des Fahrwerksbeins (11, 12) unter Druck zu setzen, während es in der besagten zusammengeklappten Stellung verriegelt ist; gekennzeichnet durch

(e) Auslösemittel (31), um die besagten Verriegelungsmittel während der Beschleunigung des Startlaufes des Flugzeuges zu entriegeln, wodurch der innere Druck des besagten Fahrwerkseines (11, 12) dieses Bein von dem Flugzeug (1) in eine ausgeklappte, außerhalb der besagten mittleren Stellung liegende Stellung ausfährt und dadurch das Flugzeug nach oben drückt und/oder seinen Anstellwinkel vergrößert, wobei das besagte Fahrwerksbein ausgefahren bleibt, bis der Druck abgelassen wird, um das Fahrwerksbein nach dem Start wieder in seine mittlere Stellung zurück zu fahren.

3. Luftfederbein nach Anspruch 2, dadurch gekennzeichnet, daß die Druckmittel eine Druckgasquelle (24) und Ventilmittel (25) umfassen, um den Fluß und den Druck des besagten Gases aus dem bzw. in dem besagten Hohlraum (18) getrennt zu steuern und dadurch die axiale Position des besagten Teleskopzylinders (12) und dementsprechend den Abstand zwischem dem Flugzeugrad und dem Flugzeug (1) einzustellen.

4. Luftfederbein nach Anspruch 2, dadurch gekennzeichnet, daß das stoßdämpfende Fahrwerksbein (11, 12) ferner ein Düsentragrohr (34) umfaßt, das koaxial in dem Teleskopzylinder (12) angeordnet ist, und einen Füllungssteuerbolzen (33), der koaxial verschiebbar in dem besagten Düsentragrohr (34) gelagert ist, und daß die besagten Auslösemittel eine Entlastungsmanschette (31) umfassen, die koaxial mit den besagten Verriegelungsmitteln angeordnet und in der Verriegelungsstellung der Verriegelungsmittel mit einem Teil dieser Verriegelungsmittel in Eingriff steht, wobei die besagte Entlastungsmanschette (31) den Füllungssteuerbolzen (33) in seiner verriegelten Stellung in dem besagten Düsentragrohr (34) hält und, wenn bewegt, dem besagten Teil der Verriegelungsmittel erlaubt, sich auszudehnen, um dadurch einem anderen Teil der besagten Verriegelungsmittel zu erlauben, zusammen zu klappen und den Füllungssteuerbolzen frei zu geben, um die besagte Verriegelungsmittel aus ihrer verriegelten Position zu entlassen.

5. Verfahren zum Erleichtern des frühzeitigen Abhebens eines Flugzeuges, das ausfahrbare Fahrwerksbeine aufweist, die in verschiedenen Entfernung vom Schwerkraftzentrum des Flugzeuges entlang der Flugzeuglängsachse angeordnet und von dort ausfahrbar sind, wobei die Fahrwerksbeine in einer zusammengeklappten Stellung gespannt und verriegelt werden, und wobei die vorderen und hinteren Fahrwerksbeine während des Startes nacheinander in dieser Reihenfolge ausgelöst werden, um entsprechenden Teilen des Flugzeuges einen Initialimpuls zum Verlassen des Bodens zu geben, gekennzeichnet durch

(a) Einbringen von Flüssigkeitsenergie in Hohlräume (18) von ersten teleskopischen, stoßdämpfenden Fahrwerksbeinen (3, 11, 12), die an einem vorderen Teil des Flugzeuges (1) angebracht sind, und von zweiten teleskopischen, stoßdämpfenden Fahrwerksbeinen (4, 5, 11, 12), die an dem Flugzeug in der Nähe seines Schwerkraftzentrums angebracht sind, während die besagten Fahrwerksbeine (3 bis 5, 11, 12) in einer zusammengeklappten Stellung verriegelt sind;

(b) Beschleunigen des Flugzeuges (1) vom Stillstand auf eine vorbestimmte Geschwindigkeit und Entriegeln der besagten ersten Fahrwerksbeine (3, 11, 12), um dadurch das Flugzeug nach oben zu kippen und seinen Anstellwinkel zu vergrößern, und

(c) darauffolgendes Entriegeln der besagten zweiten teleskopischen, stoßdämpfenden Fahrwerksbeine (4, 5, 11, 12), um dadurch das ganze Flugzeug (1) nach oben zu schieben, wobei im wesentlichen der besagte vergrößerte Anstellwinkel beibehalten wird, und

(d) Ablassen der Flüssigkeitsenergie aus den besagten Hohlräumen (18) der besagten ersten und zweiten teleskopischen, stoßdämpfenden Fahrwerksbeine (3, 4, 5, 11, 12), um die besagten Fahrwerkzbeine nach dem Abheben in eine mittlere Stellung zurück zu fahren, die der Landekonfiguration des Flugzeuges entspricht.

6. Verfahren nach Anspruch 5, dadurch gekennzeichnet, daß die Verfahrensschritte zur Aktivierung der besagten Fahrwerksbeine (3 bis 5, 11, 12) durch einen Fühler am Schwanz des Flugzeuges eingeleitet werden, der so angeordnet ist, daß der Schwanz die Erde nicht berührt.

**Revendications**

1. Procédé pour faciliter le décollage précoce d'un aéronef possédant un train d'atterrissage fixé à l'aéronef et pouvant être mis en extension par rapport à cet aéronef, dans lequel une pression de fluide est appliquée audit train d'atterrissage pendant le décollage pour le mettre en extension à partir d'un état rétracté non activé à une position d'extension totale, pour soulever au moins une partie avant de l'aéronef vers le haut, en augmentant ainsi son angle d'attaque, caractérisé en ce qu'il comprend les phases consistant à:

a) rétracter les jambes amortisseuses télescopiques (3 à 5, 11, 12) fixées à l'aéronef (1) et pouvant être mises en extension à partir de cet aéronef, à partir d'une position intermédiaire qui correspond au mode de fonctionnement de l'avion en atterrissage en laissant s'échapper la pression de cavités (18) contenues dans lesdites jambes, et à verrouiller lesdites jambes amortisseuses télescopiques (3 à 5, 11, 12) dans ladite position rétractée et appliquer la pression auxdites cavités (18) pendant que les jambes sont verrouillés dans ladite position rétractée,

b) relâcher lesdites jambes amortisseuses télescopiques (3 à 5, 11, 12) pendant le décollage, pour que l'avion (1) et/ou une partie avant de cet avion soient poussés vers le haut; et

c) laisser l'énergie de pression s'échapper desdites cavités (18) desdites jambes amortisseuses télescopiques (3 à 5, 11, 12) pour ramener lesdites jambes de leur position d'extension totale à ladite position intermédiaire après le décollage.

2. Dispositif de jambe de décollage sauté pour la mise en oeuvre dudit procédé, comprenant:

a) au moins une jambe amortisseuse télescopique comprenant un cylindre supérieur (11) et un cylindre télescopique (12), la jambe (11, 12) étant fixée audit avion (1) et pouvant être mise en extension à partir de cet avion;

b) des moyens d'échappement (47 à 49) servant à commander le relâchement de la pression d'une cavité (18) contenue dans ladite jambe pour rétracter ladite jambe (11, 12) à partir d'une position intermédiaire;

c) des moyens de verrouillage (26 à 29, 31 à 33) pour verrouiller la jambe amortisseuse (11, 12) dans un état rétracté;

d) des moyens de pression (24, 25) servant à mettre ladite cavité intérieure (18) de ladite jambe amortisseuse (11, 12) sous pression pendant qu'elle est verrouillée dans ladite position rétractée, et caractérisé par:

e) des moyens de relâchement (31) servant à déverrouiller lesdits moyens de verrouillage pendant l'accélération du roulement de décollage dudit avion, de sorte que la pression intérieure de ladite jambe (11, 12) met ladite jambe en extension à partir dudit avion (1) jusqu'à une position d'extension au-delà de ladite position intermédiaire, en poussant ainsi ledit aéronef vers le haut et/ou en accroissant son angle d'attaque, ladite jambe (11, 12) restant en extension jusqu'à ce que la pression soit mise à l'atmosphère pour ramener ladite jambe à ladite position intermédiaire après le décollage.

3. Dispositif de jambe de décollage sauté selon la revendication 2, caractérisé en ce que lesdits moyens de pression comprennent une source de gaz comprimé (24) et des moyens obturateurs (25) servant à commander sélectivement l'écoulement et la pression dudit gaz envoyé à ladite cavité (18) pour commander de cette façon la position axiale dudit cylindre télescopique (12) et, de cette façon, la distance entre la roue du train d'atterrissage et ledit aéronef (1).

4. Dispositif de jambe de décollage sauté selon la revendication 2, caractérisé en ce que ladite jambe amortisseuse (11, 12) comprend aussi un tube support d'orifices (34) positionné coaxialement dans ledit cylindre télescopique (12), et une aiguille de dosage (33) qui est montée pour coulisser coaxialement dans ledit support d'orifices (34), et en ce que lesdits moyens de relâchement comprennent un manchon de relâchement de charge (31) positionné coaxialement auxdits moyens de verrouillage et butant contre une partie desdits moyens de verrouillage lorsque lesdits moyens de verrouillage sont verrouillés, ledit manchon de relâchement de la charge (31) maintenant ladite aiguille de dosage (33) dans la position verrouillée dans ledit tube support d'orifices (34) et permettant lorsqu'elle est déplacée à ladite partie desdits moyens de verrouillage de se mettre en extension, en permettant ainsi à une autre partie desdits moyens de verrouillage de se rétracter et de relâcher ladite aiguille de dosage pour libérer lesdits moyens de verrouillage de leur position bloquée.

5. Procédé pour faciliter le décollage précoce d'un aéronef possédant des jambes extensibles fixées à des parties de l'avion situées en différents points de la longueur de l'avion par rapport au centre de gravité de l'avion, et qui peuvent être mises en extension à partir de ces parties, dans lequel les jambes sont activées et verrouillées dans un état rétracté, et dans lequel les jambes avant et arrière sont ensuite libérées dans cet ordre pendant le décollage, pour donner à des parties respectives de l'aéronef une impulsion initiale au moment où il quitte le sol, ledit procédé étant caractérisé en ce qu'il consiste à:

a) appliquer une énergie de fluide aux cavités (18) des premières jambes amortisseuses télescopiques (3, 11, 12) fixées à une partie avant de l'aéronef (1) et de deuxièmes jambes amortisseuses télescopiques (4, 5, 11, 12) fixées à l'aéronef dans le voisinage de son centre de gravité pendant que lesdites jambes (3 à 5, 11, 12) sont verrouillées dans une position rétractée,

b) accélérer ledit aéronef (1) pour le faire passer de l'arrêt à une vitesse prédéterminée et relâcher lesdites premières jambes (3, 11, 12) pour incliner ainsi l'avion vers le haut et accroître son angle d'attaque; et

c) relâcher ensuite lesdites deuxièmes jambes télescopiques (4, 5, 11, 12), pour pousser ainsi l'ensemble de l'aéronef (1) vers le haut, tout an maintenant sensiblement ledit angle d'attaque augmenté; et

d) laisser échapper l'énergie de fluide desdites cavités (18) desdites premières et deuxièmes jambes amortisseuses télescopiques (3, 4, 5, 11, 12) pour ramener lesdites jambes à une position intermédiaire correspondant au mode de fonctionnement en atterrissage de l'aéronef, après le décollage.

6. Procédé selon la revendication 5, caractérisé en outre en ce que la séquence pour l'activation desdites jambes amortisseuses (3 à 5, 11, 12) est déclenchée par une sonde située dans la queue de l'avion, qui est placée de manière que la queue ne heurte pas le sol.

FIG.1

FIG.3

FIG.2A

FIG.2B

FIG.4
PRIOR
ART

FIG.5

FIG.6

5

FIG.7

FIG.8